# EUROPEAN PATENT SPECIFICATION

(11) **EP 2 684 855 B1**
(45) Date of publication and mention of the grant of the patent: **09.09.2020**
(21) Application number: 13176226.2
(22) Date of filing: 11.07.2013
(51) Int. Cl.: C04B 26/14, C04B 28/02, G21F 1/04, G21F 1/00, G21F 1/10, G21F 3/00, G21F 3/04, C04B 111/00

(54) **SHIELDING COMPOSITE BUILDING MATERIALS WITH A LOW INTERNAL LEVEL OF IONISING RADIATION**
ABSCHIRMUNGSVERBUNDBAUSTOFFE MIT NIEDRIGEM INTERNEN GEHALT AN IONISIERENDER STRAHLUNG
MATÉRIAUX DE CONSTRUCTION COMPOSITE DE BLINDAGE AVEC UN FAIBLE NIVEAU INTERNE DE RAYONNEMENT IONISANT

(30) Priority: 12.07.2012 CZ 20120478
(43) Date of publication of application: 15.01.2014
(73) Proprietor: SOLETANCHE FREYSSINET, 92500 Rueil Malmaison (FR)
(72) Inventor: Kovár, Petr, 10 Prague (CZ); Surán, Jirí, 10 Praha (CZ); Vágner, Frantisek, Trebíc (CZ)
(74) Representative: Plasseraud IP

(56) References cited:
- WO-A1-2008/016053
- AT-B- 405 773
- DE-A1- 3 821 684
- DE-A1-102008 056 469
- DE-B- 1 094 432
- DE-C- 913 000
- DE-T5-112006 002 706
- FR-A- 1 603 362
- GB-A- 1 073 716
- US-A- 5 416 333
- EDWIN J CALLAN: "Concrete for Radiation Shielding", AMERICAN CONCRETE INSTITUTE, PROCEEDINGS,, vol. 50, no. 9, 1 September 1953 (1953-09-01), pages 17-44, XP009136047,
- BASHTER I I ET AL: "MAGNETIC ORES WITH STEEL OR BASALT FOR CONCRETE RADIATION SHIELDING", JAPANESE JOURNAL OF APPLIED PHYSICS, JAPAN SOCIETY OF APPLIED PHYSICS, JP, vol. 36, no. 6A, PART 01, 1 June 1997 (1997-06-01), pages 3692-3696, XP000732441, ISSN: 0021-4922, DOI: 10.1143/JJAP.36.3692
- LIZUREK G ET AL: "Natural radioactivity of paleozoic and mesozoic sedimentary rocks from the Upper Silesian Coal Basin borders (Poland) - in situ gamma ray measurements", CZECHOSLOVAK JOURNAL OF PHYSICS, KLUWER ACADEMIC PUBLISHERS-CONSULTANTS BUREAU, NE, vol. 56, no. 4, 1 December 2006 (2006-12-01), pages D95-D102, XP019464385, ISSN: 1572-9486, DOI: 10.1007/S10582-006-0493-8

## Description

### Field of the invention

The invention relates to a shielding composite building materials and building components made thereof, the materials and building components being based on a construction aggregate with a low content of radionuclides. The invention further relates to a use of such materials and components during construction of objects with a low internal level of ionising radiation; the low internal level of ionising radiation is achieved inside the objects by shielding of undesirable effects of ionising radiation, caused in particular by gamma radiation, radiation of electrons and neutrons particularly coming from natural radionuclides of uranium and thorium series, natural radionuclide K-40, and the cosmic radiation. Natural, environmentally friendly materials are used.

### Background of the invention

For the purposes of measurement of quantities in nuclear and atomic physics, it is important to reduce undesirable effects of ionising radiation emitted by both natural and artificial radiation sources, the so-called radiation background. At present, shielding of 5 - 10 cm thick lead wall is mainly used for this purpose in the design of the measuring equipment. Disadvantages of such design include the harmfulness of lead, content of radionuclide impurities such as radionuclide Cs-137 which is a product of nuclear tests and breakdowns, difficult handling of the shield due to a high specific weight, and high price.

To a lesser extent, shielding made of special low-background steel with thickness of 20 cm and more, in which content of radionuclides is reduced by technological procedures, is used. Disadvantages in particular include lower availability of such steel and very high price.

The other sporadically used materials, e.g. tungsten, are characterized by a very high price and are therefore only suitable for special small-size shielding.

A common disadvantage of metal-based shielding is structure complexity. In order to reduce the price and total weight for transportation, these shielding are typically a fixed part of the measuring set. This requires complex machining, component connecting and often also necessary compromises, e.g. cable grommets which reduce the shielding effect.

The building materials and building components which are currently used in the construction and which have a high specific weight, both minerogenic and combined (i.e. with added metal particles), are currently not suitable for the purposes of measurement of quantities in nuclear and atomic physics. This is due to a high content of natural radionuclides increasing a ionising radiation level inside the measuring equipment.

At present, the minerogenic building materials containing natural radionuclides are usually used for purposes of construction of residential rooms. The natural radionuclides contained in such materials and components are in particular Ra-226 and Th-228, which have specific activity values in tens of Bq/kg (Becquerel/kilogram), and K-40, which has a specific activity value in hundreds of Bq/kg. Thus, the residents are exposed to low but still undesirable ionising radiation effects of either gamma radiation, emitted from walls, or alpha or beta radiation, emitted by inbreathed products of gaseous radionuclide Rn-222.

DEI 12006002706 discloses a composite material for shielding buildings from electromagnetic radiation made from a mixture comprising: water, cement, fly ash, slag/dust/other ash, a plasticiser and aggregate (sand 0/2, sand 2/4, gravel 4/8, gravel 8/16). The document remains silent about the age and level of radionuclides of the aggregates.

GB 1073716 is concerned with a low radiation level chamber and addresses the problematic of limitation of background radiation. Screening materials for low radiation level chambers must not only be able to absorb high levels of external radiation, including cosmic radiation, but must themselves contain substantially no radioactive contamination, such as radium 226, potassium 40, thorium or uranium. The screening means consists of gypsum of low self radioactivity of not more than 10^-8 to 10^-9 micro ci/g (= 1 ci/kg). The aggregate in the gypsum is fluorspar of likewise low self radioactivity.

Such building materials and building components, which have a usual content of natural radionuclides, increase a ionising radiation level. Therefore they are currently used only in such a case where radionuclide content is not an issue, in particular for shielding of strong ionising radiation sources in the technological objects. A radiation source is in this case located inside the shielding.

### Summary of the invention

To mitigate these drawbacks, a shielding composite building material is provided. The shielding composite building material is based on aggregates in a binding matrix, wherein a specific activity of radionuclides contained in the composite building material is:
for radionuclide Ra-226 lower than 5 Bq/kg,
for radionuclide Th-228 lower than 5 Bq/kg, and
for radionuclide K-40 lower than 50 Bq/kg.

Building components made from such shielding material are also provided.

The binding matrix may comprise cement and water or, alternatively, epoxy resin.

The aggregate and/or mineral compounds of cement, which are basic components of the composite building material, are advantageously formed by materials of Paleozoic geological formations. Content of natural radionuclides with long half-lives in these very old mineral materials is considerably reduced.

In one embodiment, the shielding composite building material comprises aggregates in the range from 64 wt% to 88 wt%, cement in the range from 9 wt% to 21 wt%, and water in the range from 3.5 wt% to 10 wt%, of the total fresh production mixture. The aggregate then may preferably comprise 41 wt% to 51 wt% of grains with a grain size of 0-2 mm, 10 wt% to 20 wt% of grains with a grain size of 4-8 mm, and 34 wt% to 54 wt% of grains with a grain size of 8-11 mm. In a preferred embodiment, a plasticiser may be added, the plasticiser being in the range from 0.1 wt% to 5 wt% of the total fresh production mixture weight.

In another embodiment, a shielding composite building material and building components made thereof comprise aggregate in the range from 80 wt% to 95 wt% and epoxy resin in the range from 5 wt% to 20 wt% of the total fresh production mixture. The aggregate may preferably comprise 47 wt% to 57 wt% of grains with a grain size of 0-2 mm, 14 wt% to 24 wt% of grains with a grain size of 4-8 mm, and 24 wt% to 34 wt% of grains with a grain size of 8-11 mm.

The building components made of the above described materials have specific weight of at least 2300 kg/m³. This enables a satisfactory shielding effect. Preferably, the building components may be produced with special shapes and provided with special locks; this helps to achieve a high effectiveness of construction, enables dry construction, enables use of different geometrical shapes, self-support, optimisation of number of layers, and easier dismounting. In a preferred embodiment, the building components may be provided with holes, the holes being provided to enable easy handling and/or reinforcement of the building components by inserting bars.

The level of ionising radiation inside the object, built up of the above described building materials and building components made thereof with a low content of radionuclides, is considerably reduced in comparison with ionising radiation level outside the object.

Thus, when materials and components are used for purposes of construction of residential objects, exposure of persons to ionising radiation as well as health hazard connected with it are reduced inside the residential objects.

The above described building materials and building components made thereof enable in particular:
- easy, cheap, and effective reduction of effects of ionising radiation emitted by natural as well as artificial radionuclides;
- provision of low radiation background for needs of research and development departments, experimental, metrological, medical, and technological laboratories;
- construction of large-scale shielding objects where a use of existing materials, such as lead, is very expensive or impossible for other reasons;
- casting of blocks that are large and yet it is possible to handle them with cranes, these block being in particular useful for standardised solutions;
- replacement of currently most used lead shielding, which are, from the environmental point of view, not optimized, increase the price of production of large measuring equipment they are an integral part of, and decrease effectiveness;
- realisation of residential objects or rooms with a low internal level of ionising radiation, which reduces the danger of stochastic no-threshold effects of ionising radiation, and thus reduces danger of tumour disease.

### Brief description of the drawings

Figures 1-4 attached show examples of embodiments of building components and their applications. Figure 5 shows an example of the object with a low internal level of ionising radiation made of building materials and components according to the present invention.
Fig. 1 shows an axonometric view for the first block type with dimensions of 200 x 200 x 100 mm.
Fig. 2 shows an axonometric view for the second block type with dimensions of 400 x 200 x 100 mm.
Fig. 3 shows an axonometric view for the component with dimensions of 1600 x 100 x 100 mm suitable as the first overhead beam type for the object ceiling structure.
Fig. 4 shows an axonometric view for the component with dimensions of 1600 x 100 x 100 mm suitable as the second overhead beam type for the object ceiling structure without longitudinal locks.
Fig. 5 shows an axonometric view for a measuring cell for measurements of a large amount of materials, substances and objects with very low activities.

### Detailed description

The invention relates to a shielding composite building material and building components made thereof, based on a construction aggregate with a low content of radionuclides. The invention further relates to a use of such material and components during construction of objects with a low internal level of ionising radiation.

Aggregate and mineral compounds of cement are basic components of the composite building material and building components made thereof. Aggregate and mineral compounds are preferably formed by materials found in Paleozoic geological formations. Content of natural radionuclides with long half-lives in these very old mineral materials is considerably reduced.

The components of the composite building material must be selected so that the composite material made of these components has the specific activity for radionuclide Ra-226 lower than 5 Bq/kg. At the same time, the specific activity for radionuclide Th-228 should preferably be lower than 5 Bq/kg. At the same time, the specific activity for radionuclide K-40 should preferably be lower than 50 Bq/kg. The selection of materials is based on measurement using a gamma radiation germanium spectrometer.

A composite building material may be subsequently prepared, using the components of the composite building materials meeting the above-specified conditions. Such a composite building material may be used for production of building components comprising about 64 wt% to 88 wt% of aggregate, about 9 wt% to 21 wt% of cement, and about 3.5 wt% to 10 wt% of water, the weight percentage taken of the total weight of fresh production mixture. For example, the aggregate preferably contains 41 wt% to 51 wt% of grains with the grain size of 0-2 mm, 10 wt% to 20 wt% of grains with the grain size of 4-8 mm, and 34 wt% to 54 wt% of grains with the grain size of 8-11 mm. In order to achieve the composition of the aggregate with the preferable grain sizes, it is possible to add a plasticiser into the mixture. The percentage of the plasticiser to be added should range from 0.1 wt% to 5 wt% of the total fresh production mixture weight. The addition of the plasticiser in such percentage improves the workability of the fresh production mix.

The components of the composite building material which meet the above-described conditions may also be used for production of a composite building material. This composite building material may be further used for production of building components consisting of aggregate in the range from 80 wt% to 95 wt% and epoxy resin in the range from 5 wt% to 20 wt% of the total fresh production mixture weight. For example, the aggregate preferably comprises 47 wt% to 57 wt% of grains with the grain size of 0-2 mm, 14 wt% to 24 wt% of grains with the grain size of 4-8 mm, and 24 wt% to 34 wt% of grains with the grain size of 8-11 mm.

Content of the radionuclides in materials for production of the shielding composite building materials and in the building components made thereof is determined and verified by measurements using a gamma radiation germanium spectrometer.

As mentioned above, a mixture of aggregate, cement and water, with a possible addition of plasticiser, or alternatively a mixture of aggregate and epoxy resin, may be used for production of shielding composite building materials and components. When resin is used, the content of radionuclides in the building materials and the building components made thereof is lower. Thus the radiation background in the objects built-up of these materials and components is even lower than in case of use of cement. However, the price of these building materials and components is considerably higher. By selecting and combining the building materials using cement and epoxy resin, and components made thereof, it is possible to achieve an optimal price/performance ratio in each particular case where the object with a low internal level of ionising radiation is constructed. The type of the building material and component which contains resin achieves an improved strength and bearing capacity in comparison with a building component which contains cement and thus it is advantageously used mostly for overhead beams intended for construction of ceiling of the object.

Shielding properties of the building components are given by their high specific weight. Said high specific weight is achieved by a large share of aggregate with a precise grain size characteristic, given by a granulometric analysis.

An example of a mixture for building components, wherein the mixture consists of aggregate, cement, water, and preferably also plasticiser, and wherein the mixture meets all the above limits of the specific activity, is as follows:
12.2 wt% of cement,
6.7 wt% of water,
0.3 wt% of plasticiser, and
80.8 wt% of dry aggregates.

The mixture prepared according to the above-described example shows properties advantageous for construction of object walls and floors with a low internal level of ionising radiation.

Another example of building components made of a mixture, with the mixture meeting the above limits of the specific activity, is the mixture consisting of:
88 wt% of aggregates, and
12 wt% of epoxy resin.

The mixture prepared according to the above example shows properties advantageous for construction of the ceiling overhead beams of the object with a low internal level of ionising radiation.

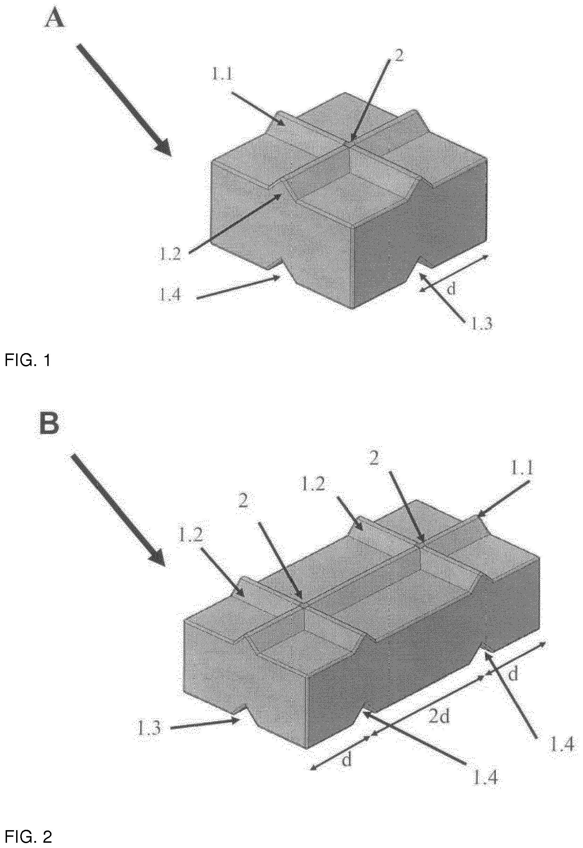

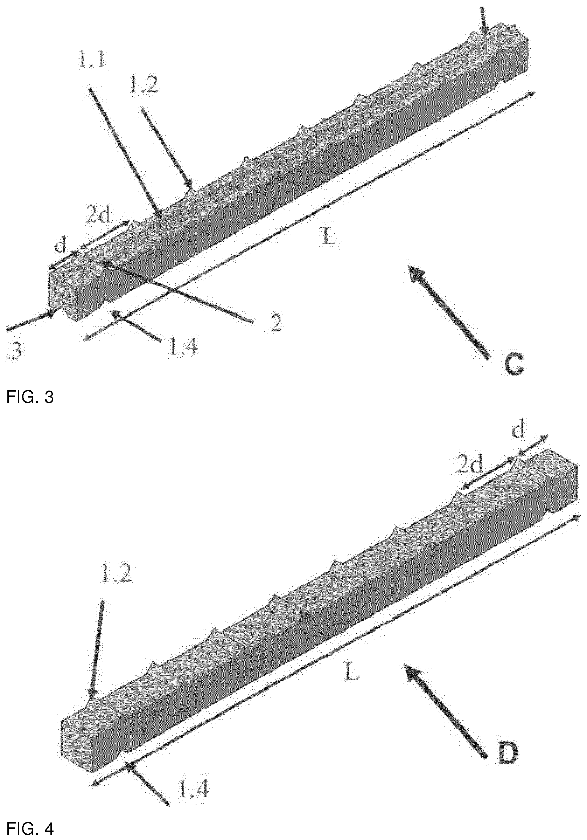

Examples of a preferred embodiment of the building components with a low content of radionuclides are shown in the drawings. Fig. 1 shows a first block A. Fig. 2 shows a second block B. Fig. 3 shows first overhead beam C. Fig. 4 shows second overhead beam D. The blocks A, B, and the overhead beams C, D, may be made in a procedure similar to the procedure of making of similar components, for example by charging the mixture into moulds while being continuously vibrated. The blocks A, B and the overhead beams C, D may be compatible with each other, i.e. all may be part of one system of building components.

The first block A as shown on Fig. 1 has a square base. The first block A is equipped with a special lock on its top and bottom sides. This lock comprises a continuous projection 1.1, formed on the top side of the first block A. The continuous projection 1.1 extends in a longitudinal axis of the first block A. The lock further comprises a second projection 1.2, formed on the top side of the first block A, extending in a direction perpendicular to the direction of the continuous projection 1.1, and intersecting the continuous projection 1.1 in the middle of its length and in the centre of the first block A. On the bottom side, complementary continuous depressions 1.3 and 1.4 are formed, the depressions being formed in a position which is symmetrical to and opposing the continuous projections 1.1 and 1.2, respectively.

The second block B, as shown on Fig. 2, has a rectangular base. The second block B may have the same width as the first block A, while the length of the second block B may be twice the length of the first block A. Analogously to the first block A, the second block B is provided with a lock on the top base. The lock comprises a continuous projection 1.1 extending in the longitudinal axis of the second block B, and second projections 1.2, which extend in a direction perpendicular to the first continuous projection 1.1. In this case, the outermost second projections 1.2 are positioned at the same distance d from the edge of the second block B. The distance d is the same as is the corresponding distance in the first block A, i.e. distance from the edge of the first block A to the projection 1.2 of the first block A. In the second block B, there is a distance of 2d between the second projections 1.2. The bottom base of the second block B is symmetrically provided with a continuous recess 1.3 opposing the continuous projection 1.1, and with second recesses 1.4 opposing the second projections 1.2.

The first overhead beam C is a prism-shaped beam. The first overhead beam C has a length L, the beam being provided with a lock on its top base. The lock comprises a continuous projection 1.1 extending in the longitudinal axis of the first overhead beam C. The lock further comprises a plurality of second projections 1.2, the second projections being perpendicular to the continuous projection 1.1. The outermost second projections 1.2 are positioned in a distance d from the edge of the first overhead beam C. The distance between each two of the inside second projections 1.2 is 2d. The bottom side of the first overhead beam C is provided with the second recesses 1.4 lying opposite the outside second projections 1.2. The length of the second recesses 1.4 is 2d, the second recesses being only provided near the edges of the first overhead beam C. Moreover, the bottom side of the first overhead beam C is also provided with a continuous recess 1.3, the continuous recess being provided opposing the continuous first projection 1.1. The first overhead beam C is of an overall width d.

The second overhead beam D is also prism-shaped, the beam having a length L. The second overhead beam D is provided with the lock on the top base consisting of the second projections 1.2 perpendicular to the longitudinal axis of the second overhead beam D. The outermost second projections 1.2 are positioned in a distance d from the edge of the second overhead beam D. The distance between each two of the inside second projections 1.2 is 2d. The bottom side of the second overhead beam D is provided with the second recesses 1.4 opposite the outside second projections 1.2. The second overhead beam D has an overall width of d.

All the continuous projections 1.1 and the second projections 1.2 have an isosceles-triangle-shaped cross sections. The second recesses 1.3, 1.4 have a complementary isosceles-triangle-shaped cross section of a size that enables a tight coupling with the first or the second projection 1.1, 1.2 respectively.

In a preferred embodiment, the first and second blocks A, B, as well as the first and second overhead beams C, D are provided with a handling and fixing hole 2. The handling and fixing hole 2 is preferably provided in at least one point of crossing of the continuous projection 1.1 and the projections 1.2. On the overhead beams C, D, the handling and fixing hole 2 is preferably provided in the crossings that are closest to the edge of the overhead beams C, D. Metal or laminate reinforcing bars may be put through the handling and fixing holes 2. The holes 2 may also serve for easy handling of the blocks and/or the overhead beams, i.e. for both assembly and disassembly.

With the above described construction, it is possible to quickly transport and assembly the building components. Therefore, the building components as described above make it possible to quickly deal with emergency situations. Moreover, due to modular uniqueness, the building components enable an effective construction and deconstruction of the objects with a low internal level of ionising radiation, optimisation of number of component layers, solution of various geometrical arrangements, building-ins, and reconstructions and modernisations of the existing objects. With the above described construction, and with respect to mechanical properties of the building components and the positioning system, strength and resistance even of large objects may be achieved. Due to the projections 1.1 and 1.2, and recesses 1.3 and 1.4, the building components create a self-supporting structure that may be additionally reinforced with vertical metal or laminate bars. This may help to meet e.g. requirements for seismicity. A dry construction is sufficient. A surface finishing such as colour scheme may be used for the building components; further surface finishing may be used e.g. for easy decontamination.

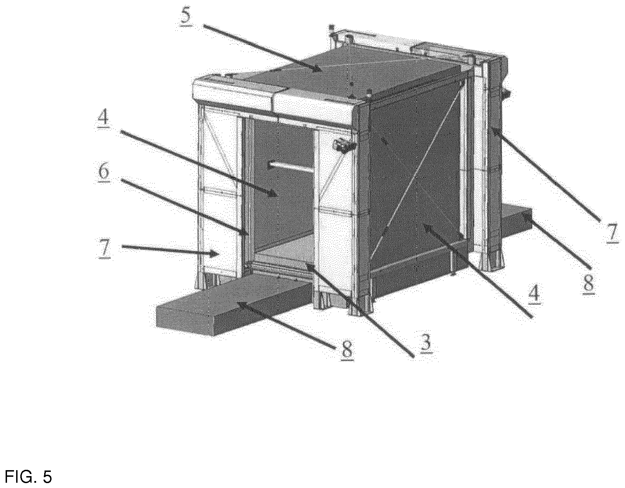

An example of an object with a low internal level of ionising radiation, built up using the building components as described above, is a cell for measurement of waste materials low radiation level and with a volume of approx. 0.5 m³. Such cell is shown on Fig. 5. Such cell comprises a floor 3 with total thickness of 60 cm, assembled of shielding blocks with a low content of radionuclides and underlaid with radon insulation. The cell further comprises walls 4 with total thickness of 40 cm built up of blocks with a low content of radionuclides and reinforced with stainless steel bars with a low content of radionuclides. The cell further comprises a ceiling 5 with thickness of 60 cm built up of overhead beams with a low content of radionuclides. The cell is equipped with two sliding doors 6. The doors 6 are assembled of frames 7. The frames 7 are made of steel with a low content of radionuclides, and filled with 20 cm thick blocks with a low content of radionuclides. As the doors 6 are of a lower thickness, the floor 3 may be provided with overhangs 8. The overhangs have preferably a length of 150 cm behind the doors 6. With these overhangs, the undesirable radiation penetrating to the cell through the doors 6 could be shielded.

The above-described system of the building components made of the building materials with a low content of radionuclides enables, through its design, a simple structure even of large objects with various geometrical arrangements. The advantageous geometrical arrangement of these building components results in a considerable reduction of external ionising radiation of a natural as well as an artificial origin. Moreover, there is a minimum contribution of ionising radiation coming from material of the building components themselves. Thus a resulting level of ionising radiation inside the built-up object is considerably reduced.

The advantageous arrangement is such a geometry of the object with a low internal level of ionising radiation and such a number of layers of individual building components or such a thickness of the cast building material, which enables an optimised degree of an internal level of ionising radiation for the given locality and purpose to be achieved.

For measuring purposes, such a design of the object with a low internal level of ionising radiation is advantageous where a detection part of the measuring equipment is situated independently, separately and completely inside the shielding object, without fixed or uneasily detachable connections between the measuring equipment and the object with a low internal level of ionising radiation. Such a design enables simplification of the structure, easy handling and transport of the measuring equipment itself, and thus a higher effectiveness of its utilisation. Thus it is possible to replace traditional metal shielding, which are fixed parts of the measuring systems.

An increased efficiency in utilisation of the measuring systems, where the systems comprise shielding objects separate from the measuring equipment to be shielded, may be achieved not only through transportability of the measuring equipment but also through transportability of the shielding object itself. This is enabled by the possibility to easily dismount the object.

The possibility to easily dismount the objects enables repeated use of the building components. Moreover, the building components mostly comprise natural materials, which pose low requirements for disposal of these components. Therefore, the building materials and building components, improve an environmental friendliness of the shielding objects.

The above described building components are self-supporting and enable to build up an object with a minimum wall and floor thickness of 20 cm. The maximum wall and floor thickness is unlimited. A minimum ceiling thickness is 10 cm, a maximum is given by spacing and profile of overhead beams which determine bearing capacity of a given profile. For example, a bearing capacity of the overhead beams shown in Fig. 3 and Fig 4 makes it possible to place the building components over this overhead beam up to the total ceiling thickness of 80 cm. Strength and bearing capacity of components achieved by their positioning as well as the special procedure of their preparation are sufficient for assurance of safe operation of the objects with low background.

The object assembly in one embodiment also consists, in addition to the building components according to the given examples, of further additional constructional elements enabling e.g. movement of entrances and exits of the objects, such as doors.

In one embodiment, a floor or another part of the object for which the possibility to dismount in full is not required may be cast from the material with a low content of radionuclides having the same composition as the building components with a low content of radionuclides.

In one embodiment, an elimination of an increase of radioactivity background inside the object with a low background caused by penetrating of radioactive gas Rn-222 and its products may be achieved by application of radon insulation layer, positioned under the floor of the shielding object. Alternatively, the insulation layer may be positioned in a wider floor area in the place of the object location. Further, an air exchange may be ensured inside the object using a filter-ventilation equipment together with application of a moderate overpressure of clean air inside the object.

It is also possible to build up large objects enabling effective measurement of a great number of materials, substances, and objects containing radionuclides with very low radioactivity at a level of natural radiation background.

### Industrial Applicability

The present invention is applicable for construction of shielding objects for measurement of materials, substances and objects with a content of radionuclides with very low activities. These measurements are normally carried out under both laboratory conditions and industrial conditions, in particular during measurement of materials, substances and objects arisen during operation or disposal of nuclear facilities for purposes of their putting into environment without further regulation, or placing to disposal sites. The present invention is also applicable for construction of residential objects or dwelling rooms with a reduced risk of stochastic effects of ionising radiation.

## Claims

1. A shielding composite building material for construction of objects, wherein the shielding composite building material is based on aggregates in a binding matrix,
**characterized in that** a specific activity of radionuclides contained in the composite building material is:
for radionuclide Ra-226 lower than 5 Bq/kg,
for radionuclide Th-228 lower than 5 Bq/kg, and
for radionuclide K-40 lower than 50 Bq/kg,
**in that** the aggregates are formed by materials of Paleozoic geological formations,
**and in that** the binding matrix comprises cement and water,
wherein the content of the radionuclides is determined and verified by measurements using a gamma radiation germanium spectrometer.

2. A shielding composite building material for construction of objects, wherein the shielding composite building material is based on aggregates in a binding matrix,
**characterized in that** a specific activity of radionuclides contained in the composite building material is:
for radionuclide Ra-226 lower than 5 Bq/kg,
for radionuclide Th-228 lower than 5 Bq/kg, and
for radionuclide K-40 lower than 50 Bq/kg,
**in that** the aggregates are formed by materials of Paleozoic geological formations,
**and in that** the binding matrix comprises epoxy resin,
wherein the content of the radionuclides is determined and verified by measurements using a gamma radiation germanium spectrometer.

3. The shielding composite building material as claimed in claim 1, wherein the mineral compounds of cement are formed by materials of Paleozoic geological formations.

4. The shielding composite building material as claimed in claim 3, made from a mixture comprising:
64 wt% to 88 wt% of aggregates;
9 wt% to 21 wt% of cement; and
3.5 wt% to 10 wt% of water.

5. The shielding composite building material as claimed in claim 4, wherein the aggregates comprise:
41 wt% to 51 wt% of grains with a grain size of 0-2 mm;
10 wt% to 20 wt% of grains with a grain size of 4-8 mm; and
34 wt% to 54 wt% of grains with a grain size of 8-11 mm.

6. The shielding composite building materials as claimed in any one of claims 4-5, wherein said mixture further comprises 0.1 wt% to 5 wt% of a plasticiser.

7. The shielding composite building materials as claimed in claim 2, made from a mixture comprising:
80 wt% to 95 wt% of aggregates; and
5 wt% to 20 wt% of the epoxy resin.

8. The shielding composite building materials as claimed in claim 8, wherein the aggregates comprise:
47 wt% to 57 wt% of grains with a grain size of 0-2 mm;
14 wt% to 24 wt% of grains with a grain size of 4-8 mm; and
24 wt% to 34 wt% of grains with the grain size of 8-11 mm.

9. A building component made of the composite building material as claimed in any of claims 1-8, wherein the building component has specific weight of at least 2300 kg/m³.

10. An object with a low background radiation, the object being built of the shielding composite building materials as claimed in any of claims 1-8, wherein a radon insulation layer is positioned under the floor of the shielding object.

11. Use of the shielding composite building materials as claimed in any of claims 1-8 during construction of objects with low internal level of ionizing radiation.

12. Use of the shielding composite building materials as claimed in any of claims 1-8 during construction of residential objects.

## Patentansprüche

1. Abschirmung-Verbund-Baumaterial zum Herstellen von Objekten, wobei das Abschirmung-Verbund-Baumaterial auf Aggregaten in einer Binder-Matrix basiert,
**dadurch gekennzeichnet, dass** eine spezifische Aktivität von Radionukliden, welche in dem Verbund-Baumaterial enthalten sind, beträgt:
für Radionuklide Ra-226 weniger als 5 Bq/kg,
für Radionuklide Th-228 weniger als 5 Bq/kg, und
für Radionuklide K-40 weniger als 50 Bq/kg,
dadurch, dass die Aggregate durch Materialien von Paleozoischen geologischen Formationen gebildet sind,
und dadurch, dass die Binder-Matrix Zement und Wasser umfasst, wobei der Gehalt der Radionuklide durch Messungen unter Verwendung eines Gammastrahlen-Germanium-Spektrometers bestimmt und verifiziert wird.

2. Abschirmung-Verbund-Baumaterial zum Herstellen von Objekten,
wobei das Abschirmung-Verbund-Baumaterial auf Aggregaten in einer Binder-Matrix basiert,
**dadurch gekennzeichnet, dass** eine spezifische Aktivität von Radionukliden, welche in dem Verbund-Baumaterial enthalten sind, beträgt:
für Radionuklide Ra-226 weniger als 5 Bq/kg,
für Radionuklide Th-228 weniger als 5 Bq/kg, und
für Radionuklide K-40 weniger als 50 Bq/kg,
dadurch, dass die Aggregate durch Materialien von Paleozoischen geologischen Formationen gebildet sind,
und dadurch, dass die Binder-Matrix Epoxy-Harz umfasst,
wobei der Gehalt der Radionuklide durch Messungen unter Verwendung eines Gammastrahlen-Germanium-Spektrometers bestimmt und verifiziert wird.

3. Abschirmung-Verbund-Baumaterial nach Anspruch 1, wobei die Mineral-Verbunde von Zement durch Materialien von Paleozoischen geologischen Formationen gebildet sind.

4. Abschirmung-Verbund-Baumaterial nach Anspruch 3, hergestellt aus einem Gemisch, umfassend:
64 Gew% bis 88 Gew% Aggregate;
9 Gew% bis 21 Gew% Zement; und
3,5 Gew% bis 10 Gew% Wasser.

5. Abschirmung-Verbund-Baumaterial nach Anspruch 4, wobei die Aggregate umfassen:
41 Gew% bis 51 Gew% Körner mit einer Korngröße von 0-2 mm;
10 Gew% bis 20 Gew% Körner mit einer Korngröße von 4 - 8 mm; und
34 Gew% bis 54 Gew% Körner mit einer Korngröße von 8-11 mm.

6. Abschirmung-Verbund-Baumaterial nach einem der Ansprüche 4 bis 5, wobei das Gemisch ferner 0,1 Gew% bis 5 Gew% Plastifizierer umfasst.

7. Abschirmung-Verbund-Baumaterial nach Anspruch 2, hergestellt aus einem Gemisch, umfassend:
80 Gew% bis 95 Gew% Aggregate; und
5 Gew% bis 20 Gew% des Epoxy-Harzes.

8. Abschirmung-Verbund-Baumaterial nach Anspruch 8, wobei die Aggregate umfassen:
47 Gew% bis 57 Gew% Körner mit einer Korngröße von 0-2 mm;
14 Gew% bis 24 Gew% Körner mit einer Korngröße von 4 - 8 mm; und
24 Gew% bis 34 Gew% Körner mit der Korngröße von 8-11 mm.

9. Baukomponente, welche aus dem Verbund-Baumaterial nach einem der Ansprüche 1 bis 8 hergestellt ist, wobei die Baukomponente ein spezifisches Gewicht von wenigstens 2300 kg/m³ aufweist.

10. Objekt mit einer geringen Hintergrundstrahlung, wobei das Objekt aus den Abschirmung-Verbund-Baumaterialien nach einem der Ansprüche 1 bis 8 gebildet ist, wobei eine Radon-Isolationsschicht unter dem Boden des Abschirmung-Objektes positioniert ist.

11. Verwendung des Abschirmung-Verbund-Baumaterials nach einem der Ansprüche 1 bis 8 während einer Herstellung von Objekten mit einem geringen internen Niveau von ionisierender Strahlung.

12. Verwendung des Abschirmung-Verbund-Baumaterials nach einem der Ansprüche 1 bis 8 während einer Herstellung von Wohnobjekten.

## Revendications

1. Matériau de construction composite de blindage pour la construction d'objets, dans lequel le matériau de construction composite de blindage est basé sur des agrégats dans une matrice de liaison,
**caractérisé en ce qu'**une activité spécifique de radionucléides contenus dans le matériau de construction composite est :
pour le radionucléide Ra-226, inférieure à 5 Bq/kg,
pour le radionucléide Th-228, inférieure à 5 Bq/kg, et
pour le radionucléide K-40, inférieure à 50 Bq/kg,
**en ce que** les agrégats sont formés par des matériaux de formations géologiques paléozoïques,
et **en ce que** la matrice de liaison comprend du ciment et de l'eau,
dans lequel la teneur des radionucléides est déterminée et vérifiée par des mesures au moyen d'un spectromètre au germanium à rayonnement gamma.

2. Matériau de construction composite de blindage pour la construction d'objets, dans lequel le matériau de construction composite de blindage est basé sur des agrégats dans une matrice de liaison,
**caractérisé en ce qu'**une activité spécifique de radionucléides contenus dans le matériau de construction composite est :
pour le radionucléide Ra-226, inférieure à 5 Bq/kg,
pour le radionucléide Th-228, inférieure à 5 Bq/kg, et
pour le radionucléide K-40, inférieure à 50 Bq/kg,
**en ce que** les agrégats sont formés par des matériaux de formations géologiques paléozoïques,
et **en ce que** la matrice de liaison comprend une résine époxy,
dans lequel la teneur des radionucléides est déterminée et vérifiée par des mesures au moyen d'un spectromètre au germanium à rayonnement gamma.

3. Matériau de construction composite de blindage selon la revendication 1, dans lequel les composés minéraux de ciment sont formés par des matériaux de formations géologiques paléozoïques.

4. Matériau de construction composite de blindage selon la revendication 3, fabriqué à partir d'un mélange comprenant :
64 % en poids à 88 % en poids d'agrégats ;
9 % en poids à 21 % en poids de ciment ; et
3,5 % en poids à 10 % en poids d'eau.

5. Matériau de construction composite de blindage selon la revendication 4, dans lequel les agrégats comprennent :
41 % en poids à 51 % en poids de grains ayant une granulométrie de 0 à 2 mm ;
10 % en poids à 20 % en poids de grains ayant une granulométrie de 4 à 8 mm ; et
34 % en poids à 54 % en poids de grains ayant une granulométrie de 8 à 11 mm.

6. Matériaux de construction composites de blindage selon l'une quelconque des revendications 4 et 5, dans lesquels ledit mélange comprend en outre 0,1 % en poids à 5 % en poids d'un plastifiant.

7. Matériaux de construction composites de blindage selon la revendication 2, fabriqués à partir d'un mélange comprenant :
80 % en poids à 95 % en poids d'agrégats ; et
5 % en poids à 20 % en poids de la résine époxy.

8. Matériaux de construction composites de blindage selon la revendication 8, dans lesquels les agrégats comprennent :
47 % en poids à 57 % en poids de grains ayant une granulométrie de 0 à 2 mm ;
14 % en poids à 24 % en poids de grains ayant une granulométrie de 4 à 8 mm ; et
24 % en poids à 34 % en poids de grains ayant une granulométrie de 8 à 11 mm.

9. Composant de construction fait du matériau de construction composite selon l'une quelconque des revendications 1 à 8, dans lequel le composant de construction présente un poids spécifique d'au moins 2300 kg/m³.

10. Objet à faible rayonnement de fond, l'objet étant construit avec les matériaux de construction composites de blindage selon l'une quelconque des revendications 1 à 8, dans lequel une couche d'isolation contre le radon est positionnée sous le sol de l'objet de blindage.

11. Utilisation des matériaux de construction composites de blindage selon l'une quelconque des revendications 1 à 8 lors de la construction d'objets à faible niveau interne de rayonnement ionisant.

12. Utilisation des matériaux de construction composites de blindage selon l'une quelconque des revendications 1 à 8 lors de la construction d'objets résidentiels.
